# EUROPEAN PATENT APPLICATION

(11) **EP 4 239 581 A1**
(43) Date of publication of application: **06.09.2023**
(21) Application number: 22398005.3
(22) Date of filing: 04.03.2022
(51) Int. Cl.: G06T 11/00

(54) **GENERATION OF 3D MODELS OF ANATOMICAL STRUCTURES FROM 2D RADIOGRAPHS**

(71) Applicant: PEEK HEALTH, S.A., 4700-312 Braga (PT)
(72) Inventor: RIBEIRO, João Pedro de Araujo Ribeiro, 4719-005 Braga (PT); SILVA, Sara Isabel Azevedo da, 4719-005 Braga (PT); CAMPOS, Jaime Frederico Bastos de, 4719-005 Braga (PT)
(74) Representative: Fish & Richardson P.C.

(57) **Abstract**

The present disclosure relates generally to the generation of 3D models of anatomical structures from 2D radiographs. For example, a computer-implemented method for generating 3D models of anatomical structures from 2D radiographs of a patient can include receiving a 2D radiograph of at least one anatomical structure of interest, pre-processing the 2D radiograph to generate a pre-processed 2D radiograph, and generating, using an AI model, a 3D representation of the at least one anatomical structure of interest.

## Description

### Technical Field

The present application describes the generation of 3D bone models from 2D X-ray images.

### Background

It is common practice in diagnosing and treating orthopedic diseases, deformities, and traumas to use medical imaging techniques. These techniques can be used to generate visual representations of the anatomy of bones, organs, and tissues. Radiology is the branch of medicine that uses medical imaging to diagnose and treat diseases. Radiological imaging technologies include, among others, X-ray radiography, Computerized Tomography (CT), Positron Emission Tomography (PET), and Magnetic Resonance Imaging (MRI). These and other technologies are commonly used for orthopedic diagnosis and treatment.

In the medical field, X-ray radiography generates two-dimensional (2D) images of anatomical parts and can be used in the diagnosis of bone and joint diseases and trauma. One limitation of X-ray radiography is its inability to provide three-dimensional (3D) information. Instead, X-ray radiography flattens the 3D volumetric information of the human body into a plane. Another limitation of X-ray radiography is its poor soft tissue contrast. This poor soft tissue contrast often precludes the diagnosis of certain pathological conditions in bones and joints. This limits the usefulness of X-ray radiography when performing a diagnosis or to be used in pre-operative planning of orthopedic surgery.

Computerized Tomography (CT), Positron Emission Tomography (PET), and Magnetic Resonance Imaging (MRI) are medical imaging techniques that can generate detailed 3D images of anatomical parts.

CT scanning is an imaging technology that uses a series of X-Ray images taken from different positions and angles that, when combined, create cross-sectional images of the anatomy. CT scanning thus provides a 3D representation of the anatomy.

PET scanning is an imaging technique that relies on radioactive substances that have been introduced into a patient's body. The radioactive substances are scanned to reconstruct the anatomy in three dimensions. A limitation of CT and PET scanning is a relatively large exposure to radiation that can potentially be harmful to human cells and increase the incidence of cancer. This exposure is greater in CT scans, since the exposure is multiplied by the number of X-ray images that are taken. PET scans can be considered more invasive, since they entail injection, inhalation, or swallowing of radioactive tracers by the patient.

MRI is an imaging technology that uses magnetic fields, magnetic gradients, and radio waves to reconstruct 3D representations of the anatomy. Although MRI does not use X-rays or harmful ionizing radiation, MRIs are limited in that they are not performed on patients with implants, pacemakers, and other implantable devices (particularly those containing iron) for safety reasons. Moreover, when used, MRI is unable to properly differentiate tissues, especially bone tissue.

Two shared limitations of the mentioned 3D medical imaging techniques (CT, PET, and MRI) are the price of the equipment and the cost of each scan. The 3D medical imaging techniques are generally more expensive than 2D X-ray technology.

It is common practice in the pre-operative diagnosis and planning of orthopedic surgery to use 3D medical images. Although 3D medical images are more expensive and potentially harmful to patients, they enable accurate analysis and examination and thus address major problems in the field. Others have proposed to obtain detailed 3D medical images without using MRI, CT, and PET scans. Some of these proposals relate to the use of X-ray radiographs to create 3D medical images.

Ying X. et al. (2019) published their scientific research titled "X2CT-GAN: reconstructing CT from biplanar X-rays with generative adversarial networks" in the Proceedings of the IEEE/CVF Conference on Computer Vision and Pattern Recognition. In this publication, they propose to reconstruct a CT scan (i.e., a three-dimensional image) from two orthogonal X-rays using the generative adversarial network (GAN) framework. A specially designed generator network is exploited to increase the data dimension from 2D (X-rays) to 3D (CT). Information from two 2D biplanar X-rays is needed to reconstruct the 3D image volume.

Document US2020334897A1 reconstructs 3D anatomical images from 2D anatomical images. A neural network is trained to reconstruct a 3D point cloud from at least one 2D image. A plurality of point clouds -- each represented by an ordered list of coordinates -- is extracted from a plurality of 3D anatomical images that depict a target anatomical structure. One of the point clouds is selected as a template. The template is non-rigidly registered with each of the plurality of point clouds to compute a respective warped template having a shape of the respective point cloud and retaining the coordinate order of the template. The plurality of warped templates is consistent in terms of coordinate order. A plurality of 2D anatomical images depicting the target anatomical structure depicted in corresponding 3D anatomical images is received and a neural network is trained to map a 2D anatomical image into a 3D point cloud using a training dataset of the warped templates and corresponding 2D images. There are some problems associated with the use of point clouds. The point clouds are a set of data points in a 3D coordinate system intended to represent the external surface of an object. This means that the solution is limited to generating hollow 3D surface representations for visualization.

In addition, this technology can only detect the existence or non-existence of bone. It is limited to using the statistical shape model technique. A statistical shape model creates a 3D image model based on the similarity of an average of models and adapted to fit the 2D anatomical image. This represents a classical neural networks approach and requires a vast database of 3D images for training. Further, generating each 3D model can be time-consuming.

Document WO2016116946A9 describes that 3D images can be obtained from X-ray information. Document WO2019180745A1 describes that 3D images can be obtained from X-ray information for deformed elongate bones. Both obtain 3D images using at least one conventional 2D X-ray image. X-ray images of a body part are identified by a camera model. A contour is extracted from the X-ray. Each anatomical region of the contour is assigned 2D anatomical values. A separate 3D template for the body part is modified to match the X-ray image by extracting silhouette vertices from the template and their projections. The template is aligned with the X-ray image and projected on an image plane to obtain a 2D projection model. The template is modified to match the anatomical values by comparing the projection with the corresponding anatomical values. Best matching points on the contour for extracted silhouette vertex projections are identified and used to back-project corresponding silhouette vertices. The 3D template is deformed so that its silhouette vertices match the target positions, resulting in a 3D reconstruction for the X-ray image. These solutions use a traditional approach that requires modification of 3D templates to match X-ray images, resulting in the 3D reconstruction for the X-ray image. They also require the full set of X-ray camera parameters and patient positioning to enable reconstruction. Thus, there is a need for a system that is less invasive and, thus, less harmful for the end user.

Kasten Y. et al. (2020) published a book chapter titled "End-To-End Convolutional Neural Network for 3D Reconstruction of Knee Bones from Bi-planar X-Ray Images" in the Machine Learning for Medical Image Reconstruction (MLMIR 2020). This book chapter presents an end-to-end Convolutional Neural Network (CNN) approach for 3D reconstruction of knee bones directly from two bi-planar images. This solution uses deep neural network technology to learn the distribution of the bone's shapes directly from training images. Digitally Reconstructed Radiographs (DRR) images are used to train the AI models. As a result, a 3D reconstruction is output from a pair of biplanar X-ray images, while preserving geometric constraints. Only a multichannel 3D encoder/decoder is used. Each one of the inputs (lateral or anteroposterior) of a 2D image is propagated to a 3D tensor, thereby creating a stack of the same cut a number of times. Furthermore, for this solution to produce accurate results, the training data must be geometrically consistent and matched at all times. Furthermore, Kasten requires that two biplanar images be used. The authors also input the entire anatomical image into the model. This solution does not allow accounting for differences in position between views (which to some degree is unavoidable in clinical practice) and outlier images. Lastly, the solution described in the chapter uses a loss function that gives extra weight to the voxels closer to the surface.

### SUMMARY

The present disclosure relates generally to the generation of 3D models of anatomical structures from 2D radiographs, for example, 3D models of bone from 2D X-ray images.

By generating a 3D representation of a patient's anatomy based on a 2D radiograph of a patient, the patient's exposure to radiation can be reduced. The process is less harmful, less invasive, more flexible, applicable to patients with iron-containing implants, and can be more affordable than other approaches. The models resulting from the present disclosure can generally be integrated in pre-operative planning systems, providing the capability to plan surgeries in three dimensions using, only, 2D medical images.

Aspects described herein include:
- computer-implemented methods, devices, and machine-readable instructions for generating 3D models of anatomical structures from 2D radiographs of a patient,
- computer-implemented methods, devices, and machine-readable instructions for producing a device that is configured to generate 3D models of anatomical structures from 2D radiographs of a patient, and
- computer-implemented methods, devices, and machine-readable instructions for producing synthetic 2D radiographs from 3D images of patients. The synthetic 2D radiographs can be used, e.g., to train a machine-learning device that is configured to generate 3D models of anatomical structures from 2D radiographs of a patient.

In some cases, the 3D models of anatomical structures that are generated can be used in pre-operative planning of orthopedic surgery, e.g., for diagnosis, for surgical planning, and/or for execution of the surgery.

In some cases, the 3D models of anatomical structures that are generated can be used for 3D or additive manufacturing of bone or other prostheses.

In some cases, only one 2D radiograph (containing the bone or other anatomical structure) needs to be used to generate a 3D model of that bone or anatomical structure. This contrasts with many existing technologies that require at least two images in two planes (for instance, anteroposterior or lateral planes).

Further, in some cases, the use of deep learning neural networks (CNN) allows the 3D models to be generated more quickly than if a statistical shape model (SSM) were to be used. In addition, CNN requires a relatively small number of training pairs.

As an example, a computer-implemented method can produce a device to generate 3D models of anatomical structures from 2D radiographs of a patient. The method can be implemented in machine-readable instructions or in data processing apparatus. The method can include receiving 3D medical images of a plurality of different patients, segmenting and labeling target anatomical structures in the 3D medical images, projecting the 3D medical images to generate synthetic 2D radiographs, wherein the labels of the first 3D medical images are projected into the synthetic 2D radiographs and training an Artificial Intelligence (AI) model to generate 3D models from 2D radiographs. The labeled 3D medical images and the labeled synthetic 2D radiographs are used as training data for training the AI model to generate 3D models from 2D images.

The method, machine-readable instructions, or data processing apparatus can include one or more of the following features. 2D radiographs and second 3D medical images of same anatomical structures of a same patient can be received and target anatomical structures of the same anatomical structures can be labeled in the 2D radiographs images and the second 3D medical images from the same patient. The Artificial Intelligence (AI) model can be trained to generate 3D models using the labeled 2D x-ray images and the labeled second 3D medical images from the same patient as training data. Training the generative AI model may include comparing the labeled synthetic 2D radiographs and the 2D x-ray images using an adversarial approach. Training the generative AI model may include comparing the labeled synthetic 2D radiographs and the 2D x-ray images in an iterative optimization problem. Projecting the 3D medical images to generate synthetic 2D radiographs can include generating synthetic 2D radiographs having one or more of: i) a single, common normalized range of pixel intensities, or ii) a single, common pixel resolution, or iii) image dimensions having values that are base two multiples of one another.

The pre-processing of images can include transforming the labeled synthetic 2D radiographs into tensors that represent the labeled synthetic 2D radiographs and training the generative AI model using the tensors as training data. Training the generative AI model can include transforming the labeled synthetic 2D radiographs into tensors, and training the generative AI model using the tensors as training data. Projecting the 3D medical images to generate synthetic 2D radiographs can include intensity based decomposition analysis wherein the 3D image is divided into a plurality of subcomponents based on their voxel intensity and each subcomponent is projected onto at least one plane to create each of the synthetic 2D radiographs.

It can be determined whether the generative AI model generates valid synthetic 2D radiographs and, in response to determining that the generated synthetic 2D radiographs are valid, the trained models can be included in a pre-operative planning system. The anatomical structures can be bones. The 2D radiographs can be 2D X-ray images. The synthetic 2D radiographs can be synthetic 2D X-ray images.

The method steps described do not need to be carried out in the indicated order. In certain embodiments, steps are carried out simultaneously or in another order.

The method steps described can include acquisition and storage of 3D medical images. The 3D medical images may be conventional and/or DICOM images, comprising Magnetic Resonance Imaging (MRI), Computerized Tomography (CT), and/or Positron Emission Tomography (PET) images.

In some cases, medical images that are acquired and stored may also include 3D and 2D images taken of the same anatomical structures from the same patient. The 3D and 2D images can be medical images representing orthopedic anatomical structures, and may comprise X-Ray, MRI, CT, and/or PET images. The 3D and 2D images can be used as part of the training of an AI model to generate 3D models of anatomical structures from 2D radiographs of a patient.

The medical images can represent orthopedic anatomical structures. The medical images may be in any variety of different formats (for example Portable Network Graphics (*.png), joint photographic group image (*.jpg), tagged image file format (*.tiff), etc.) and/or DICOM images).

The medical images can be labeled for target bones, using manual or automated means. In the present disclosure a target bone comprises any bone that has been determined to be of interest to an analysis or procedure. Target bones may be labeled manually or may be automated. The target bones are labeled and annotated in the medical images stored. The labeling of bones results in annotated datasets. Another example method includes pre-processing of the medical images. Medical images include the anatomical 2D and 3D images imported and stored into the system, and the labeled 2D and 3D images resulting from the labeling steps. The pre-processing comprises several steps of image processing. The pre-processing can include one or more of the following four different workflows:
- the pre-processing of anatomical 3D images workflow, comprising pre-processing steps for the anatomical 3D images, and resulting in the generation of tensors representing synthetic radiographs;
- the pre-processing of labeled 3D images workflow, comprising pre-processing steps for the labeled 3D images, and resulting in the generation of tensors representing one-hot encoding of 3D labeled images;
- the pre-processing of anatomical 2D images workflow, comprising pre-processing steps for the anatomical 2D images, and resulting in the generation of tensors representing computed radiographs; and
- the pre-processing of labeled 2D images workflow, comprising pre-processing steps for the labeled 2D images, and resulting in the generation of tensors representing one-hot encoding of 2D labeled images.

The tensors resulting from the pre-processing steps are used to train the AI models in the AI models training workflow.

In the method, generative AI models can be trained and deployed for image domain transfer. In certain embodiments, the training of generative AI models may use the tensors resulting from pre-processing to generate realistic synthetic radiographs and synthetic looking real radiographs. Further, the training may comprise comparing and approaching the synthetic radiographs and the real radiographs, using the initial images as reference. The AI models for image domain transfer training may use an adversarial approach, where the AI models are trained to transfer domain characteristics from synthetic to authentic radiographs and vice-versa. Furthermore, a discriminator AI model is trained to distinguish synthetic and authentic radiographs, providing the adversarial feedback to the generative AI models. The domain characteristics may be all that distinguish the two classes of images. In some embodiments, the labeled 2D images are preferably used as ground truth.

In certain embodiments the 3D and 2D images are consistent in each plane. This has the advantage that the AI models can be trained even with upside-down images.

Also, AI models can be trained to generate 3D images from 2D data. This may include comparing the realistic synthetic radiographs generated with the generative AI model with data collected from the labeling of 3D images in an iterative optimization problem to constantly update the model's parameters to improve the AI model. The AI model is trained by inputting the realistic synthetic radiographs into the AI model. In the AI model, the realistic synthetic radiographs undergo several consecutive convolutions with various filters meant to extract features of the image that can be later used to rebuild the ground truth image. Parameters of the filter and image features may be determined by comparing the output of the model to the images previously labeled (ground truth) in an iterative manner, repeatedly updating the model's parameters and improving the model performance until satisfactory metrics are achieved. The AI models can be trained to generate 3D bones from 2D data, i.e. the 2D X-ray images from a patient are used to generate 3D bones, and this reconstruction is compared to the 3D medical images from the same patient acquired and stored into the system. The AI models can be tested and validated during or after training. The testing may include analysis in terms of similarity and realism of the 3D images generated in comparison to 3D bone models created from the 3D images acquired and stored from several patients. The testing may use automatic metrics, e.g., dice coefficient metrics and/or structural similarity analysis, and/or human verification, performed manually to verify the similarity and realism of the generated 3D bone reconstruction in comparison to the 3D images acquired and imported to the pre-operative planning system. If the testing and validating reveals that the AI models are unsatisfactory, the AI models can be further trained.

In another example, a computer-implemented method for generating 3D models of bones from at least one 2D X-Ray image can include a 3D model generation workflow. The 3D model generation workflow can include
- importing 2D image data of a patient (for example, an X-ray image), the 2D image data containing an anatomical structure (typically a bone);
- automatically segmenting and labeling of target bones in the imported image data of a patient;
- Pre-processing of the imported image data of a patient;
- 3D reconstruction from the 2D data by the selected AI models, and
- generating the 3D model of an anatomical structure from the 2D image data of the anatomical structure.

The 2D image data from a patient can be imported into a software application. The 2D image data may be an X-ray radiograph. The 2D image data may be a conventional image, for example Portable Network Graphics (*.png), joint photographic group image (*.jpg), tagged image file format (*.tiff), or DICOM image.

The 2D medical images from the patient can be segmented and labeled for target bones, e.g.,using automated means incorporated into the software application.

In some cases, a 2D image from a patient can be segmented and labeled, and then undergo a pre-processing step where tensors representing labeled real radiographs and tensors representing one-hot encoding of 2D labeled image are generated. Real radiographs are digital radiographs that use flexible imaging plates to capture digital images, instead of conventional photographic film. Using the tensors generated from the pre-processing step, a 3D reconstruction of the 2D X-ray data can be performed using a trained AI model.

The different aspects and embodiments of the invention defined in the foregoing may be combined with one another, as long as they are compatible with each other.

Additional advantages and features of the invention will become apparent from the detailed description that follows and will be particularly pointed out in the appended claims.

### Brief description of the drawings

For better understanding of the present application, figures representing preferred embodiments are herein attached which, however, are not intended to limit the technique disclosed herein.
Fig. 1 - illustrates a system configured to generate 3D models of bone from 2D X-ray images in accordance with one or more embodiments of the present invention. The reference numbers relate to:
   10 - User computing device;
   11 - User interface;
   12 - 3D model generation system;
   13 - Processor;
   14 - Storage;
   15 - Communication bus;
   20 - Software application;
   21 - Workflow engine;
   22 - Training module;
Fig. 2 - illustrates a workflow for training AI models to generate 3D models of bone from 2D X-ray images. The reference numbers relate to:
   100 - AI models training workflow;
   101 - Anonymized 3D medical images acquisition and storage (MRI, CT, PET) ;
   102 - Labeling of target bones on the 3D medical images;
   103 - Acquisition and storage of anonymized 2D X-rays and 3D medical images from the same patient;
   104 - Labeling of target bones on the 2D X-ray and 3D medical images from the same patient;
   105 - Pre-processing of medical images;
   106 - Training and deployment of generative AI models for image domain transfer;
   107 - Training AI models to generate 3D bones from 2D data;
   108 - Testing of results;
   109 - Determination whether results are satisfactory;
   1091 - No;
   1092 - Yes;
   110 - Include models in the system;

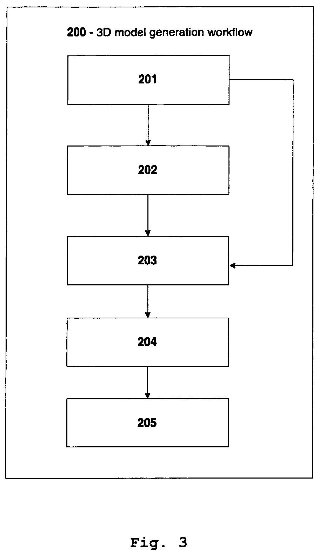

Fig. 3 - illustrates a workflow for generating 3D models of bone from 2D X-ray images. The reference numbers relate to:
   200 - 3D model generation workflow;
   201 - Importing 2D image of the patient (X-ray);
   202 - Automated segmentation and labeling of target bones;
   203 - Pre-processing of the image of the patient;
   204 - 3D reconstruction of 2D data;
   205 - Generation of 3D model from 2D X-rays;

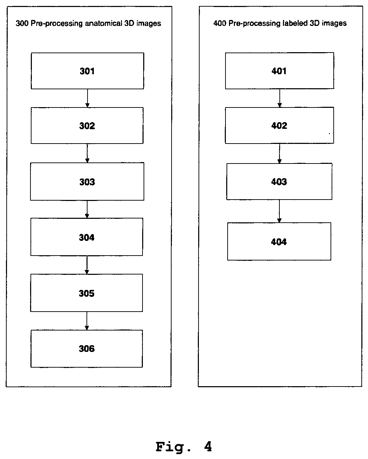

Fig. 4 - illustrates a method for pre-processing 3D medical images comprising two workflows. The first workflow comprises the steps of pre-processing the anatomical 3D medical images imported and stored in steps 101 and 103. The second workflow comprises the steps of pre-processing the 3D medical images labeled in steps 102 and 104. The reference numbers relate to:
   300 - Pre-processing anatomical 3D images workflow;
   301 - Normalizing resolution;
   302 - Clipping intensities;
   303 - Re-scaling dimensions;
   304 - Projecting to generate synthetic radiographs;
   305 - Labeling of target bones;
   306 - Representing synthetic radiographs as tensors;
   400 - Pre-processing labeled 3D images workflow;
   401 - Normalizing resolution;
   402 - Re-scaling dimensions;
   403 - One-hot encoding;
   404 - Representing one-hot encoding of 3D labeled images as tensors.

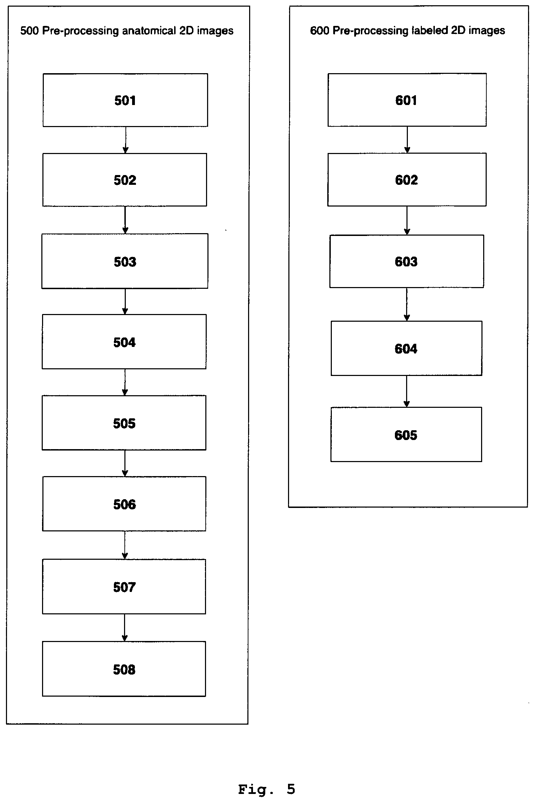

Fig. 5 - illustrates a method for pre-processing the 2D medical images comprising two workflows. The first workflow comprises the steps of pre-processing the anatomical 2D medical images imported and stored in step 103. The second workflow comprises the steps of pre-processing the 2D medical images labeled in step 104. The reference numbers relate to:
   500 - Pre-processing anatomical 2D images workflow;
   501 - Selecting the field of view;
   502 - Clipping intensities based on percentiles;
   503 - Normalizing intensities;
   504 - Correcting inhomogeneities of intensity gradients;
   505 - Normalizing resolution;
   506 - Re-scaling dimensions;
   507 - Labeling of target bones;
   508 - Representing real radiographs as tensors;
   600 - Pre-processing labeled 2D images workflow;
   601 - Selecting the field of view;
   602 - Normalizing resolution;
   603 - Re-scaling dimensions;
   604 - One-hot decoding;
   605 - Representing one-hot encoding of 2D labeled images as tensors.

### Detailed Description of Embodiments

With reference to the figures, some embodiments are now described in more detail, which are however not intended to limit the scope of the present application.

Various detailed embodiments of the present invention, taken in conjunction with the accompanying figures, are disclosed herein; however, it is to be understood that the disclosed embodiments are merely illustrative. In addition, each of the examples given in connection with the various embodiments of the present invention is intended to be illustrative, and not restrictive.

Throughout the specification, the following terms take the meanings explicitly associated herein, unless the context clearly dictates otherwise. The phrases "in one embodiment" and "in some embodiments" as used herein do not necessarily refer to the same embodiment(s), though they may. Furthermore, the phrases "in another embodiment" and "in some other embodiments" as used herein do not necessarily refer to a different embodiment, although they may. Thus, as described below, various embodiments may be readily combined, without departing from the scope or spirit of the present invention.

In addition, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the terms "and" and "or" may be used interchangeably to refer to a set of items in both the conjunctive and disjunctive in order to encompass the full description of combinations and alternatives of the items. By way of example, a set of items may be listed with the disjunctive "or", or with the conjunction "and." In either case, the set is to be interpreted as meaning each of the items singularly as alternatives, as well as any combination of the listed items.

Embodiments of the present invention may include one or more methods to generate 3D models of bone from 2D X-ray images. The generation may include the following workflows: the training workflow for AI models (100), the 3D model generation workflow (200), the pre-processing of anatomical 3D images workflow (300), the pre-processing of labeled 3D images workflow (400); the pre-processing anatomical 2D images workflow (500); and the pre-processing of labeled 2D images workflow (600).

In preferred embodiments, the workflows are performed by software application(s) (20) supported by hardware device(s) configured for that purpose.

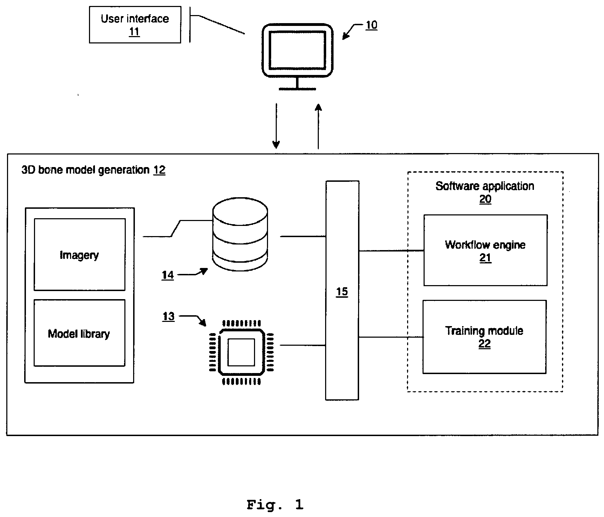

Fig. 1 illustrates a 3D model generation system (12). For example, in some embodiments, the 3D model generation system (12) receives medical images from the user for analysis and model training. For example, the user imports medical images of a patient. In some embodiments, the 3D model generation system (12) may be a part of a user computing device (10). Thus, the 3D system (12) includes hardware and software components including, e.g., the hardware and software of user computing device (10) hardware and software, cloud or server hardware and software, or a combination thereof.

In some embodiments, the 3D model generation system (12) includes hardware components such as a processor (13). Processor (13) may include local or remote processing components. In some embodiments, the processor (13) may include one or more types of data processing components, such as a hardware logic circuitry (for example an application specific integrated circuit (ASIC) and a programmable logic) or a computing device (for example, a microcomputer or microcontroller that include a programmable microprocessor). The processor may include Computing Processing Units (CPU) with RAM storage memory. In some embodiments, the processor may also include Graphic Processing Units (GPU) as secondary storage units. In some embodiments, the processor (13) may include data-processing capacity provided by the microprocessor. The microprocessor may be a Graphic Processing Unit (GPU). In some embodiments, the microprocessor may include memory, processing, interface resources, controllers, and counters. In general, the microprocessor will also include one or more programs stored in memory.

Similarly, the 3D model generation system (12) includes data storage (14) for storing imagery (e.g., medical imagery), machine learning and/or statistical models. In some embodiments, the data storage (14) may include one or more local and/or remote data storage devices such as, e.g., local hard-drive, solid-state drive, flash drive, database or other local data storage devices or any combination thereof, and/or remote data storage devices such as a server, mainframe, database or cloud data storage devices, distributed database or other suitable data storage devices or any combination thereof. In some embodiments, the storage (14) may include, e.g., a suitable non-transient computer readable medium such as, e.g., random access memory (RAM), read only memory (ROM), one or more buffers and/or caches, among other memory devices or any combination thereof.

In some embodiments, the 3D model generation (12) may run the software application (20), implement computer engines for implementing workflows. In some embodiments, the terms "computer engine" and "engine" identify at least one software component and/or a combination of at least one software component and at least one hardware component which are designed/programmed/configured to manage/control other software and/or hardware components (such as the libraries, software development kits (SDKs), objects, etc.). Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. In some embodiments, the one or more processors may be implemented as a Complex Instruction Set Computer (CISC) or Reduced Instruction Set Computer (RISC) processors; x86 instruction set compatible processors, multi- core, or any other microprocessor or central processing unit (CPU). In various implementations, the one or more processors may be dual-core processor(s), dual-core mobile processor(s), and so forth.

Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

In some embodiments, the software application (20) may include a workflow engine (21) for implementing the workflows for the 3D model generation workflow methods as described below. In some embodiments, the workflow engine (21) may include dedicated and/or shared software components, hardware components, or a combination thereof. For example, the workflow engine (21) may include a dedicated processor and storage devices. However, in some embodiments, the workflow engine (21) may share hardware resources, including the processor (13) and storage (14) of the 3D model generation system (12) via, e.g., a bus (15). Thus, the workflow engine (21) may include a memory including software and software instructions, such as, e.g. machine learning models and/or logic.

In some embodiments, the software application (20) may include a training module (22) for training machine learning/Artificial Intelligence and/or statistical models for the 3D model generation workflow methods as described below. In some embodiments, the training module (22) may include dedicated and/or shared software components, hardware components, or a combination thereof. For example, the training module (22) may include a dedicated processor and storage. However, in some embodiments, the training module (22) may share hardware resources, including the processor (13) and storage (14) of the 3D model generation system (12) via, e.g., a bus (15). Thus, the training module (22) may include a memory including software and software instructions, such as, e.g. machine learning models and/or logic.

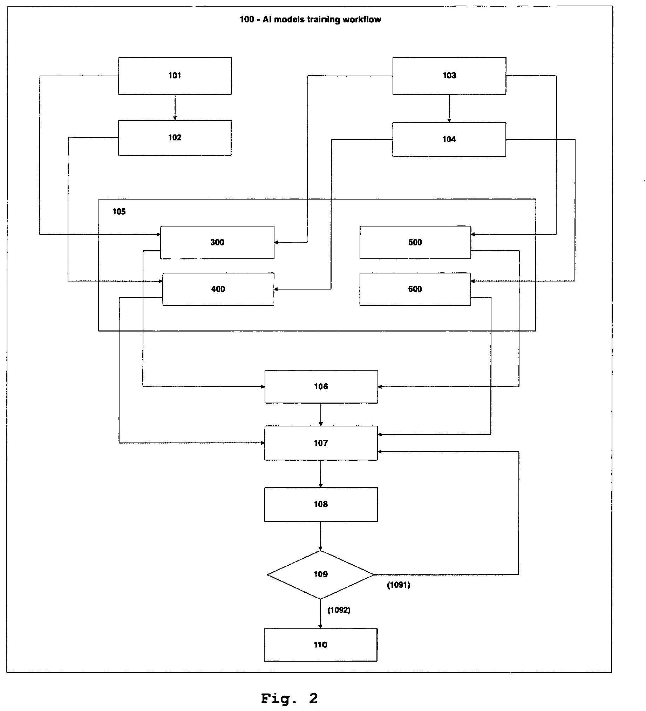

Fig. 2 illustrates a workflow for training AI models to generate 3D models of bone from 2D X-ray images (100). The training workflow for AI models (100) may be initiated in the background of the software application (20) and may not be visible or apparent to the end user. In some embodiments, the training workflow for AI models (100) may include the steps of: receipt and storage of 3D medical images (101), labeling of target bones on the 3D medical images (102), receipt and storage of 2D x-ray and 3D medical images from a same patient (103), labeling of target bones on the 2D and 3D images of the same patient (104), pre-processing of medical images (105), training and deployment of generative Artificial Intelligence (AI) models for image domain transfer (106), training AI models to generate 3D bones from 2D data (107), testing results (108), reviewing the results (109), and inclusion of the trained AI models into the system (110). To be able to create 3D bone models from 2D data, medical images stored in a database may be received and stored (101 and 103).

The medical images represent orthopedic anatomical structures and are generally acquired from hospitals and other healthcare facilities. The medical images are stored in a system to be used for training AI models. The medical images can be in a variety of different formats. For example, the images can be Portable Network Graphics (*.png) images, joint photographic group (*.jpg) images, tagged image file format (*.tiff), etc.) images, DICOM images, or the like.

The images used for the training can include but are not limited to:
- Digital Radiography (X-ray) images;
- Computed Tomography (CT) images;
- Magnetic Resonance Imaging (MRI) images; or
- Positron Emission Tomography (PET) images.

Targeted bones can be labeled in both the 3D medical images (102) and in the 2D X-ray and 3D medical images from the same patient (104). In the present disclosure a target bone comprises any bone that has been determined to be of interest to an analysis or procedure. The labeling procedures (102 and 104) may be manual in that a person analyzes and studies each medical image. For instance, the person can use an interface provided specifically for that purpose. Alternatively, the labeling procedures (102 and 104) may be automated and performed by the system. In the case of manual labeling, the person may be a professional who is trained to analyze medical images. In any case, the labeling identifies and labels bones to create annotated datasets. Labeling the images masks the anatomical images, restricts the search space of the AI models, and improves its performance.

In general, the medical images acquired and stored in steps 101 and 103 and the medical images labeled in steps 102 and 104 are anonymized for the protection of patient data. In some embodiments of the present invention, these same medical images are pre-processed (105). The pre-processing (105) step can include the pre-processing of 3D images and the pre-processing of 2D images. The pre-processing of 3D images can include two main workflows, described in Fig. 4:
- pre-processing of anatomical 3D images workflow (300), comprising the pre-processing steps for the anatomical 3D images acquired and stored in steps 101 and 103;
- pre-processing of labeled 3D images workflow (400), comprising the pre-processing steps for the 3D images labeled in steps 102 and 104;

The pre-processing of 2D images can include two main workflows, both of which are described in Fig. 5:
- pre-processing of anatomical 2D images workflow (500), comprising the pre-processing steps for the anatomical 2D images acquired and stored in steps 103 and 201;
- pre-processing of labeled 2D images workflow (600), comprising the pre-processing steps for the 2D images labeled in steps 104 and 202.

The pre-processing of the anatomical 3D images workflow (300), outputs tensors representing labeled synthetic radiographs. Synthetic radiographs are a simulation of radiographic images produced by a perspective projection of 3D images into a 2D image. The pre-processing of the labeled 3D images workflow (400), outputs tensors representing one-hot encoding of 3D labeled images.

The pre-processing of the anatomical 2D images workflow (500), outputs tensors representing labeled real radiographs.

The pre-processing of the labeled 2D images workflow (600), outputs tensors representing one-hot encoding of 2D labeled images.

In some embodiments, following the pre-processing of medical images (105), the software application (20) receives the tensors representing labeled synthetic radiographs (306) and the tensors representing labeled real radiographs (508). These tensors are used to train generative AI models for image domain transfer (106). The training of generative AI models for image domain transfer generates realistic synthetic radiographs and synthetic-looking real radiographs. In this context, in realistic synthetic radiographs, the relative change of the intensity signals (i.e., the signals representing X-ray absorption) should make the synthetic radiograph similar to a real radiograph. Similarity can be judged in terms of appearance and realism in a variety of different ways, depending on the approach used to generate the radiographs. Examples are given below. In this context, in synthetic-looking real radiographs, the relative change of the intensity signals should make the real radiograph similar to the synthetic radiograph. Similarity can be judged in terms of appearance and realism in a variety of different ways, depending on the approach used to generate the radiographs. Examples are given below.

In more detail, compared to real radiographs, synthetic radiographs are generally smoother, have less anatomical detail, have less scanner induced artifacts and no calibration markers. This results from the acquisition and projection processes. Making synthetic radiographs more realistic thus introduces fine details and characteristics that are typical in real computed radiography.

The details and characteristics added can be, for example, the calibration marker and different gradient of intensities. In contrast, making real radiographs more synthetic-looking thus removes some of the images and subject specific characteristics considered not necessary for creating the 3D models. Examples of specific characteristics removed are some of the finer anatomical and soft tissue details, which reduces their overall variability.

In some embodiments, realistic synthetic radiographs can be generated using unsupervised learning, where the parameters of the AI models are adjusted through back propagation using an optimizer. For example, the optimizer can use Stochastic Gradient Descent. The optimizer further propagates the results of a comparison of the ground truth (reference data) and the results provided by the AI models when one image is passed through the AI models in order to improve the training of the models. Thus, the training of the AI models can use two different types of images as references: namely, the 2D X-Ray images with the corresponding 3D medical images from the same patient, both labeled in step 104, and the tensors representing labeled synthetic radiographs generated at 105. In some implementations, similarity can be judged using the same model that generates the synthetic radiographs, e.g., using the same metric as the loss function used for the gradient descent.

In some embodiments, following training of the generative AI models for image domain transfer (106), the generative AI models are deployed to create realistic synthetic radiographs from 3D data. In general, the synthetic radiographs have a high degree of similarity and accuracy by fitting model parameters in an unsupervised approach, reducing the need for user intervention.

In some embodiments, based on the generative AI models for image domain transfer and the labeling of target bones (102 and 104) of the 2D and 3D medical images, the software application (20) trains the AI models to generate 3D models of digital bones from 2D data (107). In particular, the generative AI models for image domain transfer are trained to extract features from 2D medical images and to compare the information to the data collected from the labeling of 3D medical images in an iterative optimization problem. The training of AI models to generate 3D bone models from 2D data (107) uses an iterative optimization function that compares the tensors representing one-hot encoding labeled images to the previously labeled images in an iterative manner and updates the AI model's parameters. Furthermore, the optimization function may be, but is not restricted to, functions based on Stochastic Gradient Descent algorithms, for example the Adam optimizer. This means that the AI models are trained to generate 3D bones from 2D data (107).

Following the training of the AI models to generate 3D digital models of bones from 2D data (107), the results are tested (108) . The testing may be performed to analyze the results in terms of similarity and realism and may use a variety of metrics. The metrics can include, but are not limited to, dice coefficient metrics and structural similarity analysis. The testing may use metrics to compare the probability distribution of the inference with the ground truth. The metrics may include binary or categorical cross-entropy and/or similarity metrics, such as the Sorensen-Dice score and derivative metrics capable of adjusting for class weight. The metrics used may also include metrics based on the Confusion Matrix, such as the false positive and false negative and their derivatives, including accuracy, sensitivity and specificity. Testing may also include manual verification and visual inspection that is performed by a human to verify the similarity and realism of the generated 3D models of bone (107). Manual verification testing may also include manual measurements to validate bone lengths and distances.

The results from the testing (108) may then be evaluated and a determination as to whether the results are satisfactory is made (109). If the results are considered unsatisfactory (1091), the process flow returns to further train the AI models to generate 3D bones from 2D data (107). If the results are satisfactory (1092), the AI models are included in the system (110) and sent to the 3D model generation workflow (200).

Fig. 3 illustrates a workflow for generating 3D models (200) . The workflow for generating 3D models (200) includes the steps of: importing a 2D image of a patient (201), automated segmentation and labeling of target bones (202), pre-processing of the image (203), 3D reconstruction from the 2D X-ray data (204), and generation of a 3D model from the 2D X-ray data (205).

The workflow for generating 3D models (200) is initiated by importing 2D X-ray image data of a patient (201). The user begins by importing at least one 2D medical image, e.g., conventional and DICOM images, composed of a 2D Digital Radiograph (X-ray). For example, the 2D medical image is imported (201) from a picture archiving and communication system (PACS), a Compact-Disk (CD), a folder or a Universal Serial Bus (USB) device or an external storage device. The image provides 2D representations of an anatomical structure of a patient.

The 2D medical images from the patient are segmented and labeled for target bones (202). In general, the segmentation and labeling is automated and performed by the software application (20). However, manual or combined manual/automated approaches are also possible. In some implementations, the 2D image from a patient imported in step 201 and the 2D image from a patient segmented and labeled in step 202 are pre-processed (203). The pre-processing (203) comprises the two workflows, described in Fig. 5: the pre-processing of anatomical 2D images workflow (500) and the pre-processing of labeled 2D images workflow (600). The pre-processing of the anatomical 2D images workflow (500) outputs tensors representing labeled real radiographs. The pre-processing of the labeled 2D images workflow (600) outputs tensors representing one-hot encoding of 2D labeled images.

In some implementations of the present invention, using the tensors resulting from the pre-processing step (203), the software application (20) performs a 3D reconstruction of the 2D X-ray data (204). In the 3D reconstruction of the 2D X-ray data (204), the trained AI models resulting from the training workflow (100) are used. The 3D reconstruction of the 2D X-ray data (204) comprises the use of the AI models validated in step 109 and included in the system in step 110. The 3D reconstruction and segmentation generally reproduce the bone structure and create a 3D model from the 2D X-ray of a patient (205).

In some embodiments, the 3D bone model may be presented on the user interface (11) such that the user is able to visualize, zoom, rotate, measure distances and/or angles and/or otherwise interact with the obtained images. The generated 3D model that results may be integrated in pre-operative planning systems and provide the capability to plan surgeries using 2D medical images.

In some embodiments, the 3D model generation workflow (200) uses two different 2D X-ray images of the same anatomical area of the same patient. For example, anteroposterior and lateral 2D X-ray images of the same portion of the same patient can be received, segmented, and used in the 3D reconstruction.

In some embodiments, a 3D model interface environment of the software application (20) for the 3D model generated from 2D X-ray images may have two common sections: the toolbar and the object editor options. In some implementations, the 3D model interface environment can be operated in 2D or hybrid setting, i.e. in an environment comprised of 2D and 3D environments.

In some embodiments, the software application (20) may use one or more exemplary AI/machine learning techniques for generating 3D models (203), as well in other uses as described above. The AI/machine learning techniques may include, e.g., decision trees, boosting, support-vector machines, neural networks, nearest neighbor algorithms, Naive Bayes, bagging, random forests, and the like. In some embodiments and, optionally, in combination of any embodiment described above, an exemplary neutral network technique may be one of, without limitation, feedforward neural network, radial basis function network, recurrent neural network, convolutional network (e.g., U-net) or other suitable network. In some embodiments and, optionally, in combination of any embodiment described above or below, an example implementation of a Neural Network may be executed as follows:
i) define Neural Network architecture/model,
ii) prepare and transfer the input data to the neural network model,
iii) train the model incrementally,
iv) determine the evaluation metric for a specific number of timesteps,
v) apply the trained model to process the newly-received input data,
vi) optionally and in parallel, continue to train the trained model with a predetermined periodicity and compare it to the best model.

In some embodiments and, optionally, in combination with any embodiment described above, the trained neural network model may specify a neural network by at least a neural network topology, a series of activation functions, and connection weights. For example, the topology of a neural network may include a configuration of nodes of the neural network and connections between such nodes. In some embodiments and, optionally, in combination of any embodiment described above, the trained neural network model may also be specified to include other parameters, including but not limited to, bias values/functions and/or aggregation functions, and regularization functions. Regularization functions may include batch normalization, instance normalization, and dropout functions. For example, an activation function of a node may be a step function, sine function, continuous or piecewise linear function, sigmoid function, hyperbolic tangent function, or other type of mathematical function that represents a threshold at which the node is activated. In some embodiments and, optionally, in combination with any embodiment described above, the aggregation function may be a mathematical function that combines (e.g., sum, product, etc.) input signals to the node. In some embodiments and, optionally, in combination with any embodiment described above or below, an output of the aggregation function may be used as input to the exemplary activation function. In some embodiments and, optionally, in combination with any embodiment described above or below, the bias may be a constant value or function that may be used by the aggregation function and/or the activation function to make the node more or less likely to be activated.

In some embodiments, the convolutional neural network layers are used to extract key information from input images, creating a set of latent features that encode the necessary information to transform 2D images into 3D bone models.

Fig. 4 illustrates a method for pre-processing 3D medical images comprising two workflows. The first workflow (300) comprises the steps of pre-processing the anatomical 3D medical images imported and stored in steps 101 and 103. The second workflow (400) comprises the steps of pre-processing the 3D medical images labeled in steps 102 and 104.

The pre-processing of anatomical 3D images (300) may include the steps of: normalizing image resolution (301), clipping intensities (302), re-scaling dimensions (303), projecting to generate synthetic radiographs (304), labeling of target bones (305), transforming the images into tensors that represent synthetic radiographs (306).

An example of normalizing image resolution (301) includes the process of converting random sized medical images to a pre-established isotropic resolution, maintaining the original features and elements, fitted to the new size.

Clipping intensities (302) in anatomical images limits image intensities to a predetermined range. For example, the intensity range of the image can be limited by setting intensity values below or above lower and upper thresholds to these respective threshold values. In some cases, the intensity range of different images can be normalized to a common range. For example, the intensity values can be normalized to a range from 0 to 1.

Re-scaling image dimensions (303) include re-scaling voxel sizes to an isotropic resolution. Image dimensions, comprised by height, width, and depth, may be re-scaled. For example, image dimensions can be rescaled to an exponential value of base 2 (i.e., 2, 4, 8, 16, 32, 64, 128, 256).

The anatomical 3D medical images are projected into two-dimensional space to generate synthetic 2D radiographs (304). In certain embodiments, the projection includes an intensity-based decomposition analysis. The intensity-based analysis divides every 3D medical image into a plurality of sub-components based on their voxel intensity. This means the medical image is divided into sub-components based on the value on a regular grid in three-dimensional space. The sub-components are recombined based on their weighted average of voxel intensity and a new representation of the image is created. The image resulting from the combination of the sub-components may be projected into one or more planes (x, y, or z) by averaging their values along that plane while preserving the initial intensity range. This simulates the projection of an X-ray to create a simulated X-ray image. Spatial rotations and translations of the original 3D medical images and sequential generation of synthetic radiographs can be used to augment the dataset. Augmentation produces more instances of training data that can be used to improve the accuracy of the AI models.

In some embodiments, the synthetic radiographs are labeled for target bones (305). The labeled synthetic radiographs are transformed into tensors representing synthetic radiographs (306). A tensor is a mathematical object and a generalization of matrices that represent arrays with n-dimensions. The synthetic radiographs are transformed into tensors with, e.g., four shape dimensions. The four shape dimensions can be, e.g., batch size, width, height, and number of channels. Batch size is the number of used cases in every iteration or inference of the training process. Width and height correspond to the physical dimensions of the image. In the context of this process, the number of channels in the number of image elements (bones) that are to be reconstructed.

The tensors representing the synthetic radiographs are the output of the pre-processing of anatomical 3D images workflow (300) and are used to train generative AI models for image domain transfer (106). Fig. 4 further comprises a second workflow (400) comprising the steps of pre-processing the 3D medical images labeled in steps 102 and 104. The pre-processing of labeled 3D images (400) may include the steps of: normalizing image resolution (401), re-scaling dimensions (402), one-hot encoding (403), and transforming the image into a tensor that represents one-hot encoding (404).

In some embodiments, the step of normalizing image resolution (401) occurs in the same way as described in workflow 300, in step 301. In some embodiments, the step of re-scaling of dimensions 402 occurs in the same way as described in workflow 300, in step 303.

In some embodiments, the one-hot encoding (403) of the labeled 3D images corresponds to the transformation of image data into representations of categorical variables as binary vectors. One-hot encoding transforms the format in which the data is presented. The one-hot encoding adds a new dimension to the image (i.e., 3D images are transformed into 4D images). The added dimension represents each of the bones.

In some embodiments, the one-hot encoding images are transformed into tensors representing a one-hot encoding (404) of a 3D labeled image. This transformation adds dimensions that can be useful when training the AI models. The additional dimensions can include both batch size and number of channels. When both are added, the final five-dimensional "shape" of the labeled images includes data on batch size, depth, width, height, and number of channels. The tensors representing the one-hot encoding of a 3D labeled image represent the output of the pre-processing of labeled 3D images workflow (400) and are used to train AI models to generate 3D bones from 2D data (107) .

Fig. 5 illustrates a method for pre-processing 2D medical images comprising two workflows. The first workflow (500) comprises the steps of pre-processing the anatomical 2D medical images imported and stored in steps 103 and 201. The second workflow (600) comprises the steps of pre-processing the 2D medical images labeled in steps 104 and 202.

The pre-processing of anatomical 2D images (500) may include the steps of: selecting a field of view (501), clipping intensities based on percentiles (502), normalizing intensities (503), correcting inhomogeneities of intensity gradients (504), normalizing resolution (505), re-scaling dimensions (506); labeling of target bones (507), and transforming into tensors representing real radiographs (508).

Example of selecting a field of view (501) includes the process of selecting the relevant parts of the image. In general, real world radiographs include in their extended background anatomical structures, besides the anatomy of interest (for example, soft tissues), and calibration markers that are not necessary for this technology. Furthermore, real radiographs may also not be centered in the anatomy of interest. Selecting the field of view limits the image to relevant data. For example, the synthetic radiographs generated in step 304 are centered in the anatomy of interest and only include the field of view necessary to plan the target procedure. Selecting a field of view similar to the synthetic radiographs reduces variability associated with real radiographs and improves the system performance. Selection of the field of view may be performed automatically or manually. Image cropping and padding ensure the correct position and size of the field of view and limits the image to relevant data.

In some embodiments, the clipping of intensities based on percentiles (502) in anatomical 2D images includes limiting image intensities to a predetermined range. Real world radiographs generally have a variety of intensity profiles. This variety can be caused by different acquisition parameters and/or the machine used for the scan. The variety of intensity profiles can include, for example, the existence of low intensity background noise or very high intensity spikes associated with machine artifacts or non-tissue structures. Intensity profiles can also include a variety of contrasts associated with the skewness of the histogram of intensities. In contrast, the synthetic radiographs outputted from step 304 are generated from clipped CT scans and undergo averaging processes and thus do not have a wide array of values and have a better set intensity histogram skewness. An analysis of the histogram of intensities can be used to determine the intensity values associated with key predetermined percentiles and these intensity values can be used to limit the range of intensities in the image.

The intensity range of the image can be limited by setting intensity values below or above lower and upper thresholds to these respective threshold values. In some cases, the intensity range of different images can be normalized to a common range. In other embodiments, the shape of the histogram can be adjusted by applying mathematical transformations to correct skewness in the event that it falls outside of the standard parameters that are found in synthetic radiographs. This adjustment improves image contrast and makes it more similar to synthetic radiographs, thus improving the inference performance.

In some embodiments, the step of normalizing intensities (503) of the labeled 2D images comprises the normalization of intensity values to a standard range (for example, 0 to 1 or other). Normalizing the intensities of real radiographs to the same standard range used in synthetic radiographs results in the same values and the same representation across both types of images.

In some embodiments, the step of correcting inhomogeneities of intensity gradients (504) includes calculating the existence of broad gradients of intensity within the image. Generally, real radiographs present gradients of intensity along the image's horizontal and vertical axis. These gradients are not related to anatomical structures, but rather result from scanner and/or acquisition artifacts. These intensity gradients are not present on synthetic radiographs generated in step 304 and, furthermore, they may vary between subjects. Their removal improves the system's ability for generalization. In other embodiments, a mask identifying key anatomical structures within the image can be used to improve this process.

In some embodiments, the step of normalizing image resolution (505) occurs in the same way as described in steps 301 and 401. As with field of view, real radiographs can have different in-plane resolutions. These may create image distortions once the dimensions are rescaled. To avoid distortions, the resolution is normalized to an isotropic value (i.e., to a value equal in the two dimensions). In some embodiments, the step of re-scaling dimensions (506) occurs in the same way as described in steps 303 and 402. Artificial Intelligence systems require a standardized image dimension to be trained and to perform inferences. Synthetic radiographs generated in step 304 are produced with standardized dimensions, but real radiographs may have a wide variety of shapes. To ensure the same dimensions are used, re-scaling of dimensions needs to be applied. In some embodiments, the step of labeling target bones (507) occurs in the same way as described in step 305, resulting in a labeled real radiograph. In step 305, to avoid training the models with anatomical data (for example, bones, muscles, and other tissues) that is not the target structure, a mask of labeled target bones is applied to the synthetic radiographs. Similarly, in the current step (507), data from the real radiographs that relates to structures other than the targeted anatomical structures should not be used.

In some embodiments, the labeled real radiographs are transformed into tensors representing real radiographs (508). The real radiographs undergo the transformation into tensors with four shape dimensions. The tensors representing the real radiographs represent the output of the pre-processing of anatomical 2D images workflow (500) and is one of the inputs to train and deploy generative AI models for image domain transfer (106).

Fig. 5 further comprises a second workflow (600), comprising the steps of pre-processing the 2D medical images labeled in step 102. The pre-processing of labeled 2D images (600) may include the steps of: selecting the field of view (601), normalizing resolution (602), re-scaling dimensions (603), one-hot encoding (604), and transforming the 2D labeled images into tensors.

In some embodiments, the step of selecting the field of view (601) occurs in the same way as described in step 501.

In some embodiments, the step of normalizing image resolution (602) occurs in the same way as described in steps 301, 401, and 505.

In some embodiments, the step of re-scaling dimensions (603) occurs in the same way as described in steps 303, 402, and 506.

In some embodiments, the step of one-hot encoding (604) occurs in the same way as described in step 403.

In some embodiments, the one-hot encoding images are transformed into tensors representing a one-hot encoding (605) of 2D labeled images, adding the dimensions necessary for the AI models training in AI. The additional dimensions can include batch size and number of channels. The tensors representing the one-hot encoding of a 2D labeled image represent the output of the pre-processing of labeled 2D images workflow (600) and is one of the inputs to train AI models to generate 3D bones from 2D data.

## Claims

1. A computer-implemented method for generating 3D models of anatomical structures from 2D radiographs of a patient, the method comprising:
receiving a 2D radiograph of at least one anatomical structure of interest;
pre-processing the 2D radiograph to generate a pre-processed 2D radiograph, wherein the pre-processing includes one or more of the following:
a) normalizing a resolution of the 2D radiograph to an isotropic value that is equal in the two dimensions, or
b) identifying a gradient in intensity in the 2D radiograph, wherein the gradient is along a vertical axis or a horizontal axis of the 2D radiograph, and
removing the gradient in intensity, or
c) normalizing a range of pixel intensities in the 2D radiograph, or
d) transforming pixel intensities in the 2D radiograph to change the histogram of the intensities, applying image domain transfer; and
generating, using an AI model, a 3D representation of the at least one anatomical structure of interest.

2. A device implemented in one or more data processors, the device comprising:
a preprocessing component configured to receive 2D radiographs of at least one anatomical structure of interest and pre-process each of the received radiographs to generate respective pre-processed radiographs; and
an AI model configured to receive each of the pre-processed radiographs and generate a 3D representation of the at least one anatomical structure of interest in the pre-processed radiograph,
wherein the pre-processing performed by the preprocessing component includes one or more of the following:
a) normalizing a resolution of the 2D radiograph to an isotropic value that is equal in the two dimensions, or
b) identifying a gradient in intensity in the 2D radiograph, wherein the gradient is along a vertical axis or a horizontal axis of the 2D radiograph, and
removing the gradient in intensity, or
c) normalizing a range of pixel intensities in the 2D radiograph, or
d) transforming pixel intensities in the 2D radiograph to change the histogram of the intensities, applying image domain transfer.

3. The method of claim 1 or the device of claim 2, wherein normalizing the range of pixel intensities comprises setting intensity values below a lower threshold to the lower threshold or setting intensity values above an upper threshold to the upper threshold.

4. The method of either of claims 1 or 3 or the device of any of claims 2-3, wherein normalizing the range of pixel intensities comprises normalizing the range of pixel intensities in each of the received two-dimensional radiographs to a same range.

5. The method of any of claims 1 or 3-4 or the device of any of claims 2-4, wherein transforming the pixel intensities comprises transforming the pixel intensities in each of the received 2D radiographs to approximate a common image domain.

6. The method of any of claims 1 or 3-5 or the device of any of claims 2-5, wherein the pre-processing further comprises:
centering the anatomical structures of interest in the 2D radiograph;
selecting a field of view in the 2D radiograph; and
limiting the pre-processed radiograph to the selected field of view.

7. The method of any of claims 1 or 3-6 or the device of any of claims 2-6, wherein the pre-processing further comprises:
segmenting and labeling the at least one anatomical structure of interest in the 2D radiograph;
transforming the labeled 2D radiograph into a binary vector that includes a representation of categorical variables;
transforming the binary vector into a tensor representing the labeled 2D radiograph.

8. The method or the device of claim 7, wherein the pre-processing further comprises:
one-hot encoding of the labeled 2D radiograph; and
transforming the one-hot encoding into a tensor.

9. The method or the device of claim 7 or claim 8, wherein the tensors include a batch size shape dimension, wherein batch size is a number of cases used in an iteration of a training process to train the generative artificial intelligence model.

10. The method or the device of any of claims 7-9, wherein the tensors include a number of channels dimension, wherein the number of channels is a number of anatomical structures of interest for which a three-dimensional representation is to be generated.

11. The method or the device of any one of the preceding claims, wherein the anatomical structure of interest is a bone.

12. The method or the device of any one of the preceding claims, wherein the 2D radiograph is a 2D x-ray image.

13. A method comprising producing a device configured to perform the method of any one of claims 1 or 3-12.

14. A method comprising producing the device according to any one of claims 2-12.

15. The method of either of claims 13 or 14, wherein the method comprises:
receiving 3D medical images of a plurality of different patients;
segmenting and labeling target anatomical structures in the 3D medical images;
projecting the labeled 3D medical images to generate synthetic 2D radiographs, wherein the labels of the first 3D medical images are projected into the synthetic 2D radiographs; and
training a generative Artificial Intelligence (AI) model to assist generating 3D models from 2D x-ray images of a patient, wherein the labeled 3D medical images and the labeled synthetic 2D radiographs are used as training data for training the generative AI model.

## Amended claims

### Amended claims in accordance with Rule 137(2) EPC.

1. A computer-implemented method (200) for generating 3D models of anatomical structures from 2D radiographs of a patient, the method comprising:
receiving (201) a 2D radiograph of at least one anatomical structure of interest;
pre-processing (203) the 2D radiograph to generate a pre-processed 2D radiograph, wherein the pre-processing comprises
segmenting and labeling (202) the at least one anatomical structure of interest in the 2D radiograph [previous cl. 7; p. 11, l. 20-23], and wherein the pre-processing further includes one or more of the following:
a) normalizing a resolution of the 2D radiograph to an isotropic value that is equal in the two dimensions, or
b) identifying a gradient in intensity in the 2D radiograph, wherein the gradient is along a vertical axis or a horizontal axis of the 2D radiograph, and removing the gradient in intensity, or
c) normalizing a range of pixel intensities in the 2D radiograph, or
d) transforming pixel intensities in the 2D radiograph to change an histogram of the intensities, applying image domain transfer; and
generating (205), using an AI model and the preprocessed 2D radiograph, a 3D representation of the at least one anatomical structure of interest.

2. A device implemented in one or more data processors, the device comprising:
a preprocessing component configured to receive 2D radiographs of at least one anatomical structure of interest and pre-process each of the received radiographs to generate respective pre-processed radiographs; and
an AI model configured to receive each of the pre-processed radiographs and generate a 3D representation of the at least one anatomical structure of interest in the pre-processed radiograph,
wherein the pre-processing performed by the preprocessing component comprises
segmenting and labeling the at least one anatomical structure of interest in the 2D radiograph [previous cl. 7; p. 11, l. 20-23], and wherein the pre-processing further includes one or more of the following:
a) normalizing a resolution of the 2D radiograph to an isotropic value that is equal in the two dimensions, or
b) identifying a gradient in intensity in the 2D radiograph, wherein the gradient is along a vertical axis or a horizontal axis of the 2D radiograph, and removing the gradient in intensity, or
c) normalizing a range of pixel intensities in the 2D radiograph, or
d) transforming pixel intensities in the 2D radiograph to change an histogram of the intensities, applying image domain transfer.

3. The method of claim 1 or the device of claim 2, wherein normalizing the range of pixel intensities comprises setting intensity values below a lower threshold to the lower threshold or setting intensity values above an upper threshold to the upper threshold.

4. The method of either of claims 1 or 3 or the device of any of claims 2-3, wherein normalizing the range of pixel intensities comprises normalizing the range of pixel intensities in each of the received two-dimensional radiographs to a same range.

5. The method of any of claims 1 or 3-4 or the device of any of claims 2-4, wherein transforming the pixel intensities comprises transforming the pixel intensities in each of the received 2D radiographs to approximate a common image domain.

6. The method of any of claims 1 or 3-5 or the device of any of claims 2-5, wherein the pre-processing further comprises:
centering the anatomical structures of interest in the 2D radiograph;
selecting a field of view in the 2D radiograph; and
limiting the pre-processed radiograph to the selected field of view.

7. The method of any of claims 1 or 3-6 or the device of any of claims 2-6, wherein the pre-processing further comprises:
transforming the labeled 2D radiograph into a binary vector that includes a representation of categorical variables;
transforming the binary vector into a tensor representing the labeled 2D radiograph.

8. The method or the device of claim 7, wherein the pre-processing further comprises:
one-hot encoding of the labeled 2D radiograph; and
transforming the one-hot encoding into a tensor.

9. The method or the device of claim 7 or claim 8, wherein the tensors include a batch size shape dimension, wherein batch size is a number of cases used in an iteration of a training process to train the generative artificial intelligence model.

10. The method or the device of any of claims 7-9, wherein the tensors include a number of channels dimension, wherein the number of channels is a number of anatomical structures of interest for which a three-dimensional representation is to be generated.

11. The method or the device of any one of the preceding claims, wherein the anatomical structure of interest is a bone.

12. The method or the device of any one of the preceding claims, wherein the 2D radiograph is a 2D x-ray image.

13. A method comprising producing a device configured to perform the method of any one of claims 1 or 3-12.

14. A method comprising producing the device according to any one of claims 2-12.

15. The method of either of claims 13 or 14, wherein the method comprises:
receiving 3D medical images of a plurality of different patients;
segmenting and labeling target anatomical structures in the 3D medical images;
projecting the labeled 3D medical images to generate synthetic 2D radiographs, wherein the labels of the first 3D medical images are projected into the synthetic 2D radiographs; and
training a generative Artificial Intelligence (AI) model to assist generating 3D models from 2D x-ray images of a patient, wherein the labeled 3D medical images and the labeled synthetic 2D radiographs are used as training data for training the generative AI model.
